(19) **Europäisches Patentamt**
**European Patent Office**
**Office européen des brevets**

(11) **EP 2 410 396 B1**

(12) **EUROPEAN PATENT SPECIFICATION**

(45) Date of publication and mention of the grant of the patent:
**10.09.2014 Bulletin 2014/37**

(21) Application number: **10753342.4**

(22) Date of filing: **09.02.2010**

(51) Int Cl.:
*G05D 1/08* (2006.01)      *B62K 1/00* (2006.01)
*B62K 17/00* (2006.01)     *G05D 1/02* (2006.01)

(86) International application number:
**PCT/JP2010/051836**

(87) International publication number:
**WO 2010/106847 (23.09.2010 Gazette 2010/38)**

(54) **MOVING DIRECTION CONTROLLER AND COMPUTER PROGRAM**

BEWEGUNGSRICHTUNGSSTEUERUNG UND COMPUTERPROGRAMM

DISPOSITIF DE COMMANDE DE DIRECTION DE DÉPLACEMENT ET PROGRAMME D'ORDINATEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.03.2009 JP 2009062177**

(43) Date of publication of application:
**25.01.2012 Bulletin 2012/04**

(73) Proprietor: **Murata Manufacturing Co., Ltd.**
**Kyoto 617-8555 (JP)**

(72) Inventors:
 • **TSUJI Shigeru**
  **Nagaokakyo-shi**
  **Kyoto 617-8555 (JP)**
 • **FUKUNAGA Shigeki**
  **Nagaokakyo-shi**
  **Kyoto 617-8555 (JP)**
 • **NAMURA Mitsuhiro**
  **Nagaokakyo-shi**
  **Kyoto 617-8555 (JP)**
 • **KAWAI Koji**
  **Nagaokakyo-shi**
  **Kyoto 617-8555 (JP)**

 • **SHIRATO Kenichi**
  **Nagaokakyo-shi**
  **Kyoto 617-8555 (JP)**

(74) Representative: **Lloyd, Patrick Alexander Desmond et al**
**Reddie & Grose LLP**
**16 Theobalds Road**
**London WC1X 8PL (GB)**

(56) References cited:
**EP-A- 1 632 428         EP-A1- 1 977 964
WO-A1-2005/016735   WO-A1-2008/139740
JP-A- 2001 030 972    JP-A- 2005 335 471
JP-A- 2006 001 385    JP-A- 2007 161 198
JP-T- 2003 502 002    US-A1- 2007 257 451**

 • **MAJIMA S ET AL: "A Controller for Changing the Yaw Direction of an Underactuated Unicycle Robot", 5TH INTERNATIONAL CONFERENCE ON TECHNOLOGY AND AUTOMATION (ICTA05),, 15 October 2005 (2005-10-15), pages 1-6, XP003022061,**

**Description**

TECHNICAL HELD

The present invention relates to a movement direction control apparatus and a computer program enabling even a monocycle to freely veer in a yaw direction.

BACKGROUND ART

Conventionally, when a monocycle is moved, a body swings in a rotation direction with a substantially front-back direction serving as an axis (hereinafter, referred to as a roll direction), and in a rotation direction with a substantially right-left direction serving as an axis (hereinafter, referred to as a pitch direction), and thus, motions need to be controlled so as to move or stop the body without falling by controlling balance in the roll direction and in the pitch direction. In order to control the balance in the roll direction and in the pitch direction, an inclination of the body needs to be property detected, and for example, a method of detecting an angular velocity, using an angular velocity sensor and integrating the detected angular velocity to thereby estimate the inclination of the body, or the like has been employed (refer to WO 2007/063665).

Moreover, the monocycle cannot easily veer by changing an angle of a front wheel as in a two-wheeler, and for example, in many cases, by swinging the body in the roll direction and in the pitch direction, the body is rotated in a rotation direction with a substantially vertical direction of the body serving as an axis (hereinafter, referred to as a yaw direction) to change a traveling direction. That is, as disclosed in "Attitude Control of Monocycle" by Takashi Kasai, Master's Thesis in Graduate School of Systems and Information Engineering, University of Tsukuba, Jan. 2005, p. 1-37 (Non-Patent Literature 1), by applying sinewave inputs in the roll direction and in the pitch direction to fluctuate phases of both the applied sinewave inputs, a yaw angle change amount is varied, and a yaw angle of a wheel is feedback-controlled so as to perform the veering in a desired movement direction.

However, while in the monocycle disclosed in the document "Attitude Control of Monocycle" by Takashi Kasai, Master's Thesis in Graduate School of Systems and Information Engineering, University of Tsukuba, the inclination of the body to a gravity direction (vertical direction) is detected by an acceleration sensor, the vertical direction is not necessarily in a balanced state in the roll direction and in the pitch direction. Thus, there is a problem that when the vertical direction is not in the balanced state, correction for the balanced state is disabled, Also, there is a problem that a plurality of acceleration sensors are required in addition to a gyrosensor for estimating the inclination of the body, which makes simplification and downsizing of a constitution of the apparatus difficult. The paper entitled "A Controller for Changing the Yaw Direction of an Underactuated Unicycle Robot" by Majima and Kasai, Graduate School of Systems and Information Engineering, University of Tsukuba further discusses an applied control system.

Moreover, in the case of the two-wheeler, by controlling operation of an actuator that causes a steerable front wheel provided in a front portion of the body to be steered, the veering in a desired movement direction is enabled. However, in the monocycle, there is a problem that since a steering wheel and a drive wheel coincide with each other and a friction coefficient largely differs between during movement and during stopping, it is difficult to specify a rotation moment to be applied to a desired rotation angle.

We have therefore appreciated that it would be desirable to provide a movement direction control apparatus and a computer program enabling a movement direction of a monocycle to be accurately controlled with a simple, convenient constitution.

SUMMARY OF THE INVENTION

The present invention is defined in the independent claims to which reference is now directed. Preferred features are set out in the dependent claims.

According to the invention there is provided a movement direction control apparatus made up of a wheel that rotates and moves in a front-back direction, and a body that is joined to a rotary shaft of the wheel, and swings in a pitch direction and in a roll direction above the wheel, the body including an angular velocity sensor for yaw that detects a yaw angular velocity, which is a rotation angular velocity in a yaw direction, a rotor with a substantially vertical direction of the body serving as a rotation axis, and a motor for yaw that rotates the rotor, wherein a rotation angle in the yaw direction of the body is controlled in accordance with a reaction torque accompanying the rotation of the rotor. The movement direction control apparatus additionally includes a yaw-angle specification receiving unit that receives specification of a yaw angle of the wheel as a target of a movement direction, friction-torque information acquiring means for acquiring information of a friction torque including a magnitude and a direction of the friction torque, a yaw-direction angular acceleration calculating unit that calculates a rotation angular acceleration in the yaw direction, based on the yaw angle the specification of which has been received, reaction torque calculating means for calculating the reaction torque, based on the calculated rotation angular acceleration in the yaw direction, and a motor-for-yaw operation instruction generating unit that generates an operation instruction to the motor for yaw, based on the calculated reaction torque and the acquired information of the friction torque.

The friction-torque information acquiring means may include friction torque receiving means for receiving specification of the magnitude and the direction of the friction torque.

Alternatively, the friction-torque information acquiring means may include yaw rotation angle detecting means for detecting a rotation angle of the wheel in the yaw direction, fluctuating torque detecting means for detecting a torque in the yaw direction at time when the rotation angle in the yaw direction starts fluctuation, and static-friction torque calculating means for calculating a magnitude of a static friction torque, based on the detected torque in the yaw direction, and the calculated static friction torque is acquired as the friction torque.

Preferably, the friction-torque information acquiring means includes convergent torque detecting means for detecting the torque in the yaw direction at time when the rotation angle in the yaw direction converges, and dynamic-friction torque calculating means for calculating a magnitude of a dynamic friction torque, based on the detected torque in the yaw direction, and the calculated dynamic friction torque is acquired as the friction torque.

According to the invention, there is also provided a computer program executable in a computer mounted on a movement direction control apparatus, the movement direction control apparatus being made up of a wheel that rotates and moves in a front-back direction, and a body that Is joined to a rotary shaft of the wheel, and swings in a pitch direction and in a roll direction above the wheel, the body including an angular velocity sensor for yaw that detects a yaw angular velocity, which is a rotation angular velocity in a yaw direction, a rotor with a substantially vertical direction of the body serving as a rotation axis, and a motor for yaw that rotates the rotor, wherein the computer is caused to function as means for controlling a rotation angle in the yaw direction of the body in accordance with a reaction torque accompanying the rotation of the rotor. The computer program additionally causes the computer to function as a yaw-angle specification receiving unit that receives specification of a yaw angle of the wheel as a target of a movement direction, friction-torque information acquiring means for acquiring information of a friction torque including a magnitude and a direction of the friction torque, a yaw-direction angular acceleration calculating unit that calculates a rotation angular acceleration in the yaw direction, based on the yaw angle the specification of which has been received, reaction torque calculating means for calculating the reaction torque, based on the calculated rotation angular acceleration in the yaw direction, and a motor-for-yaw operation instruction generating unit that generates an operation instruction to the motor for yaw, based on the calculated reaction torque and the acquired information of the friction torque.

The computer program may cause the friction-torque information acquiring means to function as friction torque receiving means for receiving specification of the magnitude and the direction of the friction torque.

Alternatively, the computer program may cause the friction-torque information acquiring means to function as yaw rotation angle detecting means for detecting a rotation angle of the wheel in the yaw direction, fluctuating torque detecting means for detecting a torque in the yaw direction at time when the rotation angle in the yaw direction starts fluctuation, and static-friction torque calculating means for calculating a magnitude of a static friction torque, based on the detected torque in the yaw direction, and means for acquiring the calculated static friction torque as the friction torque.

Preferably, the computer program causes the friction-torque information acquiring means to function as convergent torque detecting means for detecting the torque in the yaw direction at time when the rotation angle in the yaw direction converges, and dynamic-friction torque calculating means for calculating a magnitude of a dynamic friction torque, based on the detected torque in the yaw direction, and means for acquiring the calculated dynamic friction torque as the friction torque.

In embodiments of the invention, the movement direction control apparatus is made up of the wheel that rotates and moves in the front-back direction, and the body that is joined to the rotary shaft of the wheel, and swings in the pitch direction and the roll direction above the wheel. The body includes the angular velocity sensor for yaw that detects the yaw angular velocity, which is the rotation angular velocity in the yaw direction, the rotor with the substantially vertical direction of the body serving as the rotation axis, and the motor for yaw that rotates the rotor, and the rotation angle in the yaw direction of the body is controlled in accordance with the reaction torque accompanying the rotation of the rotor. This allows a movement direction of a monocycle to be accurately controlled with a simple, convenient constitution.

In preferred embodiments of the invention, the specification of the yaw angle of the wheel as the target of the movement direction is received, and the information of the friction torque including the magnitude and the direction of the friction torque is acquired. The rotation angular acceleration in the yaw direction is calculated, based on the yaw angle the specification of which has been received, and the reaction torque is calculated, based on the calculated rotation angular acceleration in the yaw direction. The operation instruction to the motor for yaw is generated, based on the calculated reaction torque and the acquired information of the friction torque. Thereby, the torque to be generated in the yaw direction of the rotor that generates the reaction torque can be accurately estimated, based on the yaw angle the specification of which has been received, and by controlling a number of rotations and a rotation direction of the motor for yaw that rotates the rotor, corresponding to the yaw angle the specification of which has been received, the movement direction of the body can be veered to a desired movement direction.

Here, the "yaw angle" means a difference angle between a traveling direction of the body and a direction in which the body is veered, when the traveling direction of the body, that is, the current direction of the wheel is used as a reference.

In preferred embodiments of the invention, by receiving the specification of the magnitude and the direction of the friction torque, the rotation angular acceleration in the yaw direction of the rotor that generates the reaction torque in view of the friction torque by the contact between the wheel and the road surface can be estimated, and the number of rotations and the rotation direction of the motor for yaw that rotates the rotor can be more accurately calculated.

In preferred embodiments of the invention the rotation angle in the yaw direction of the wheel is detected, the torque in the yaw direction at the time when the rotation angle in the yaw direction starts fluctuation is detected, and the magnitude of the static friction torque is calculated, based on the detected torque in the yaw direction. By acquiring the calculated static friction torque as the friction torque, the rotation angular acceleration in the yaw direction of the rotor that generates the reaction torque in view of the static friction torque, which is relatively large at the starting time of the veering, can be estimated.

In preferred embodiments of the invention, the torque in the yaw direction at the time when the rotation angle in the yaw direction converges is detected, and the magnitude of the dynamic friction torque is calculated, based on the detected torque in the yaw direction. By acquiring the calculated dynamic friction torque as the friction torque, the dynamic friction torque occurring at the time of the veering can be found, and the movement direction of the body can be accurately veered to the desired movement direction.

According to preferred embodiments of the invention, the torque to be generated in the yaw direction of the rotor that generates the reaction torque can be accurately estimated, based on the yaw angle the specification of which has been received, and by controlling the number of rotations and the rotation direction of the motor for yaw that rotates the rotor, corresponding to the yaw angle the specification of which has been received, the movement direction of the body can be veered to the desired movement direction.

## BRIEF EXPLANATION OF DRAWINGS

The present invention will now be described by way of example only with reference to the accompanying drawings in which:

FIGS. 1(a) and 1(b) are a front view and a side view schematically showing a constitution of a monocycle robot to which a movement direction control apparatus according to an embodiment of the present invention is applied.

FIG. 2 is a schematic view for explaining a pitch direction, a roll direction and a yaw direction.

FIG. 3 is a control block diagram showing one example in which a movement direction of the monocycle robot is controlled.

FIGS. 4(a) and 4(b) are a front view and a side view schematically showing a constitution of a lower portion of the monocycle robot to which the movement direction control apparatus according to the embodiment of the present invention is applied.

FIGS. 5(a) to 5(c) are schematic views for explaining a rotation torque occurring in an inertia rotor and a body.

FIGS. 6(a) to 6(c) are graphs showing a procedure example for calculating a yaw angular acceleration from a yaw angle.

FIGS, 7(a) to 7(c) are graphs showing a procedure example in which a rotation angle of the inertia rotor is calculated from a rotation angular acceleration of the inertia rotor.

FIGS. 8(a) and 8(b) are graphs for explaining a method for specifying a friction torque to be specified.

FIG. 9 is a flowchart showing a procedure of veering processing by a controller of a control board of the movement direction control apparatus according to the embodiment of the present invention.

## DETAILED DESCRIPTION OF PREFERRED EMBODIMENTS OF THE INVENTION

Hereinafter, referring to the drawings, an example will be specifically described, in which a movement direction control apparatus according to an embodiment of the present invention is applied to a monocycle robot that moves forward and backward without falling by rotation of a wheel, while swinging a body mounted above the wheel.

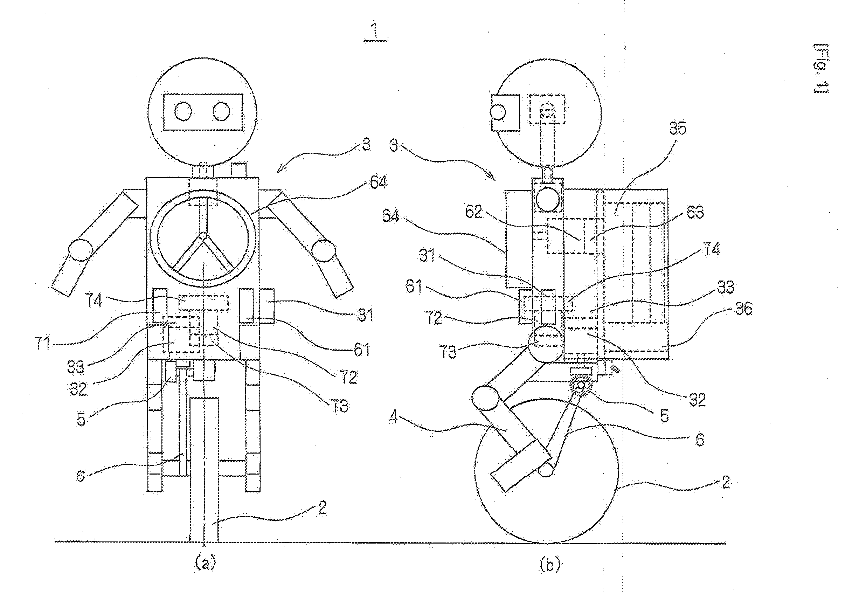

FIGS. 1(a) and 1(b) are a front view and a side view schematically showing a constitution of the monocycle robot to which the movement direction control apparatus according the embodiment of the present invention is applied. FIG. 1(a) is a front view, and FIG. 1(b) is a left side view, respectively. The movement direction control apparatus according to the present embodiment carries out control so that a movement direction of a body 3 of a monocycle robot 1 becomes a desired direction.

As shown in FIGS. 1(a), 1(b), the monocycle robot 1 is made up of a wheel 2 that rotates and moves in a front-back direction, and the body 3 that is joined to a rotary shaft of the wheel 2 and veers in a yaw direction while swinging in a pitch direction and in a roll direction above the wheel 2. White in the example in FIGS. 1(a), 1(b), the body 3 is a humanoid robot, the present invention is not limited thereto.

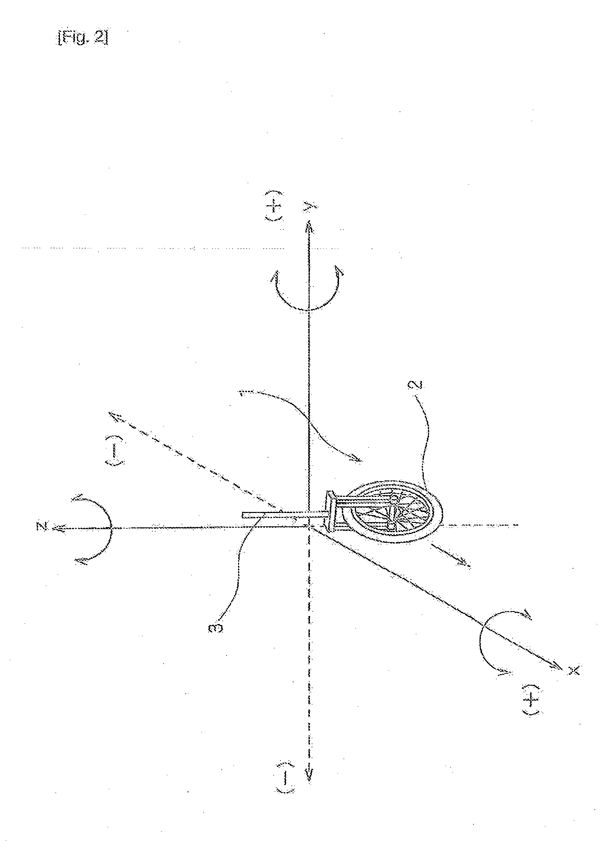

Here, the pitch direction, the roll direction and the yaw direction are defined. FIG. 2 is a schematic view for explaining the pitch direction, the roll direction and the yaw direction. As shown in FIG. 2, when the monocycle robot 1 moves so as to advance in a (+) direction of an x axis on an xy surface, or to recede in a (-) direction of the x axis, a rotation direction around a y axis is the pitch direction. When the body 3 rotates counterclockwise when seen from the (+) direction of the Y axis, the body 3 is inclined forward, and when body 3 rotates clockwise when seen from the (+) direction in the y axis, the body 3 is inclined backward. Moreover, a rotation direction around the x axis is the roll direction, which is a rotation direction when the body 3 swings in a right-left direction. Furthermore, a rotation direction around a z axis is the yaw direction, which is a rotation direction when the direction of the wheel 2 is inclined from the x axis direction.

As shown in FIGS. 1(a), 1(b), the body 3 includes a gyrosensor for pitch (angular velocity sensor for pitch) 31 that detects a pitch angular velocity, which is a rotation angular velocity in the pitch direction, a motor for pitch 32 that links to the rotation of the wheel 2 to rotate the wheel 2, and an encoder for pitch (rotation sensor for pitch) 33 that detects a rotation position or a rotation velocity of the motor for pitch 32. The gyrosensor for pitch 31 is attached to the body 3 so that a detection axis not shown to detect the pitch angular velocity is directed in a substantially right-left direction. Here, while the substantially right-left direction means that slight angular deviation from a strict right-left direction (the y axis direction in FIG. 2) is permitted, it goes without saying that it is preferable that the detection axis coincides with the y axis direction. The body 3 and the wheel 2 are joined by frames 4 rotatably supporting the wheel 2, and the rotation by the motor for pitch 32 is transmitted to the wheel 2 through a bevel gear 5 included in body 3 and a belt 6, The frames 4 are a part of the body 3, and in the example in FIGS. 1(a), 1(b), the frames 4 are legs of the humanoid robot as the body 3. The angular velocity sensor for pitch only needs to be able to detect the pitch angular velocity, and it is not limited to the gyrosensor.

Moreover, in addition to the above-described constitution to prevent failing in the pitch direction, the body 3 includes a gyrosensor for roll (angular velocity sensor for roll) 61 that detects a roll angular velocity, which is a rotation angular velocity in the roll direction, an inertia rotor 64 that rotates in the roll direction, a motor for roll 62 that links to rotation of the inertia rotor 64 to rotate the inertial rotor 64, and an encoder for roll (rotation sensor for roll) 63 that detects a rotation position or a rotation velocity of the motor for roll 62. The gyrosensor for roll 61 is attached to the body 3 so that a detection axis not shown to detect the roll angular velocity is directed in a substantially front-back direction. Here, while the substantially front-back direction means that slight angular deviation from a strict front-back direction (the x axis direction in FIG. 2) is permitted, it goes without saying that it is preferable that the detection axis coincides with the x axis direction. The angular velocity sensor for roll only needs to be able to detect the roll angular velocity, and it is not limited to the gyrosensor.

Furthermore, the body 3 includes a gyrosensor for yaw (angular velocity sensor for yaw) 71 that detects a yaw angular velocity, which is a rotation angular velocity in the yaw direction, an inertial rotor 74 that rotates in the yaw direction, a motor for yaw 72 that links to rotation of the inertia rotor 74 to rotate the inertia rotor 74, and an encoder for yaw (rotation sensor for yaw) 73 that detects a rotation position or a rotation velocity of the motor for yaw 72. The gyrosensor for yaw 71 is attached to the body 3 so that a detection axis not shown to detect the yaw angular velocity is directed in a substantially vertical direction. Here, while the substantially vertical direction means that slight angular deviation from a strict vertical direction (the z axis direction in FIG. 2) is permitted, it goes without saying that it is preferable that the detection axis coincides with the z axis direction. The angular velocity sensor for yaw only needs to be able to detect the yaw angular velocity, and it is not limited to the gyrosensor.

On a back of the humanoid robot as the body 3, a control board 35 to control the operations of the motor for pitch 32, the motor for roll 62 and the motor for yaw 72, and a battery 36 are carried. On the control board 35, a driver to drive and rotate the motor for pitch 32, the motor for roll 62 and the motor for yaw 72, and an A/D converter, a D/A converter, a counter, a controller and the like are mounted. The controller is specifically a microprocessor, a CPU, an LSI or the like. The monocycle robot 1 is controlled so as to be balanced in the pitch direction, utilizing a reaction torque when the wheel 2 is rotated, is balanced in the roll direction, utilizing a reaction torque when the inertia rotor 64 is rotated. A rotation angle in the yaw direction is controlled, utilizing a reaction torque when the inertia rotor 74 is rotated.

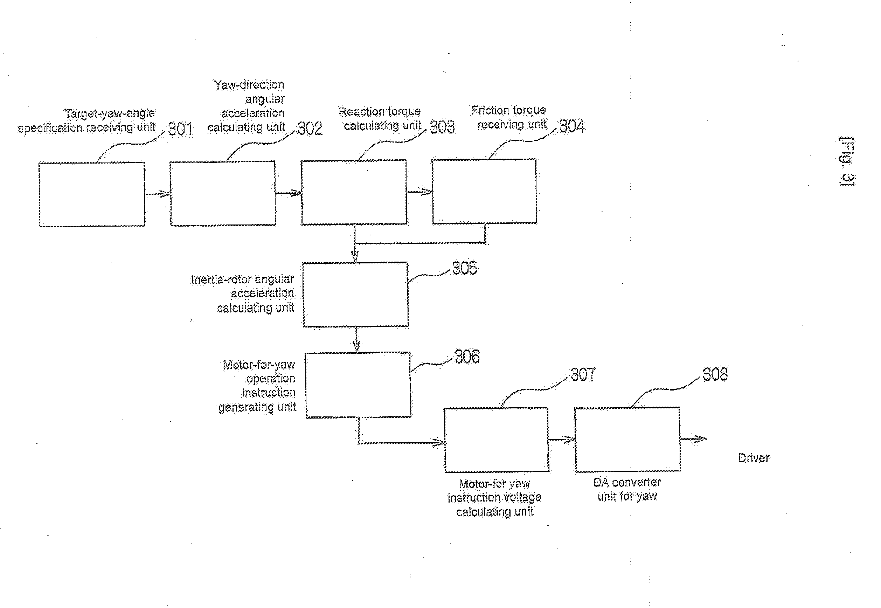

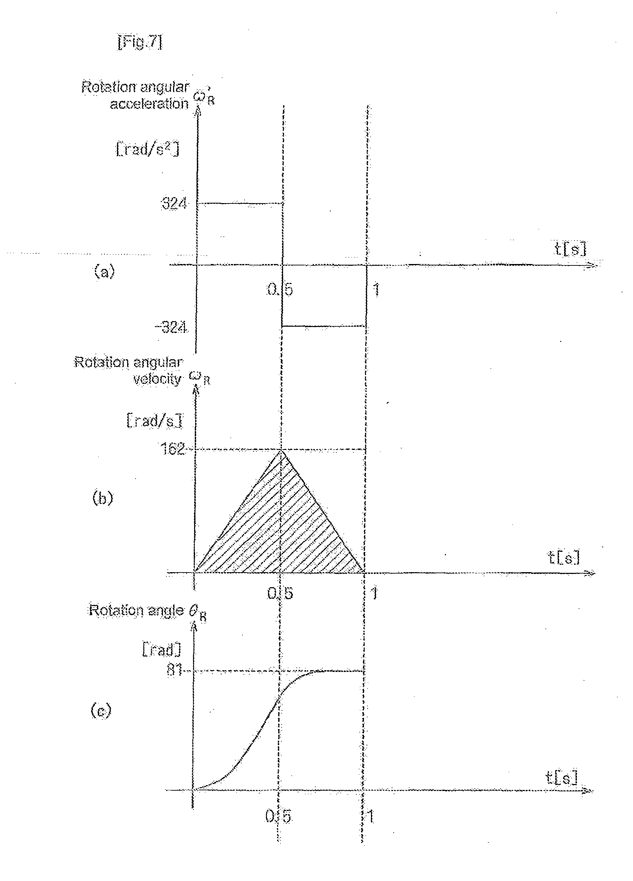

FIG. 3 is a control block diagram showing one example in which the movement direction of the monocycle robot 1 is controlled. A target-yaw-angle specification receiving unit 301 receives specification of a target yaw angle $\theta_t$ with a desired movement direction defined as the target yaw angle $\theta_t$. That is, the target yaw angle $\theta_t$ means a difference angle from a traveling direction in which the wheel 2 is currently directed. A method for receiving the specification of the target yaw angle $\theta_t$ is not particularly limited, and the target yaw angle $\theta_t$ to be specified may be received externally through radio communication such as Bluetooth (registered trademark), or a memory may be incorporated in the controller of the control board 35 to store the target yaw angle $\theta_t$ in the memory in advance. Moreover, a slot into which a memory card or the like can be inserted may be provided, and the memory card or the like in which the target yaw angle $\theta_t$, is stored may be inserted to read the target yaw angle $\theta_t$ as needed It is preferable to receive specification of a reaching time t until a yaw angle $\theta$, which is the rotation angle in the yaw direction, reaches the target yaw angle $\theta_t$, for example,

specification to the effect that the yaw angle $\theta$ reaches the target yaw angle $\theta_t$ in one second. Given that a yaw angular acceleration $\omega'$, which is a rotation angular acceleration in the yaw direction, is a constant value obtained by carrying out positive/negative inversion at a midpoint of the reaching time t, variation in a yaw angular velocity $\omega$ and the yaw angle $\theta$ can be approximately calculated more easily (refer to FIG. 7(a) described later).

A yaw-direction angular acceleration calculating unit 302 calculates the yaw angular velocity $\omega$ by carrying out time differentiation to the yaw angle $\theta$, based on the target yaw angle $\theta_t$ the specification of which has been received, and the reaching time t until the yaw angle $\theta$ reaches the target yaw angle $\theta_t$. Further, the time differentiation is carried out to the calculated yaw angular velocity $\omega$ to calculate the yaw angular acceleration $\omega'$ (rotation angular acceleration in the yaw direction). Given that the yaw angular acceleration co' is the constant value obtained by carrying out the positive/negative inversion at the midpoint of the reaching time t, the yaw angular velocity $\omega$ monotonically increases at a constant rate until half of the reaching time t until the target yaw angle $\theta_t$ is reached has passed, and after half of the reaching time t until the target yaw angle $\theta_t$ is reached has passed, the yaw angular velocity $\omega$ monotonically decreases at a constant rate (refer to FIG. 7(b) described later).

For example, in the above-described example, the yaw angular acceleration $\omega'$ can be calculated as the positive constant value until half of the reaching time t until the target yaw angle $\theta_t$ is reached has passed, and can be calculated as the negative constant value after half of the reaching time t until the target yaw angle $\theta_t$ is reached has passed, respectively.

A reaction torque calculating unit 303 calculates a rotation torque T2 required to rotate the body 3 to the target yaw angle $\theta_t$, based on the yaw angular acceleration $\omega'$ calculated in the yaw-direction angular acceleration calculating unit 302. The same torque as the rotation torque T2 in the yaw direction of the body 3 is applied as the reaction torque by the rotation of the inertia rotor 74, by which the yaw angle 0 of the body 3 can be controlled (refer to FIG. 7(c) described later).

A friction torque receiving unit 304 receives specification of a friction torque Tr in accordance with a friction coefficient between the wheel 2 and a road surface. The reception of the specification of the friction torque Tr includes specification of at least a magnitude and a direction of the friction torque Tr. Moreover, a method for receiving the specification of the friction torque Tr is not particularly limited, and the magnitude and the direction of the friction torque Tr may be received externally through the radio communication such as Bluetooth (registered trademark). In place of the friction torque receiving unit 304, the magnitude and the direction of the friction torque Tr may be acquired in the controller of the control board 35 as a friction torque information acquiring unit, or may be stored in the memory in the controller of the control board 35 as constants. Moreover, a slot into which a memory card or the like can be inserted may be provided, and the memory card or the like in which the magnitude and direction of the friction torque Tr are stored may be inserted to read the friction torque Tr as needed

Here, unless the reaction torque is applied extra by the friction torque Tr, the body 3 cannot be rotated up to the target yaw angle $\theta_t$ the specification of which has been received. Accordingly, a rotation torque T1 to be applied by the rotation of the inertia rotor 74 can be found by an expression (1).

$$T1 = T2 + Tr \quad \cdots (1)$$

An inertia-rotor angular acceleration calculating unit 305 calculates a rotation angular acceleration $\omega_R'$ of the inertia rotor 74, based on the rotation torque T1 calculated by the expression (1). That is, if an inertia moment of the inertia rotor 74 is J1, the rotation angular acceleration $\omega_R'$ of the inertia rotor 74 can be calculated by an expression (2).

$$\omega_R' = T1/J1 \quad \cdots (2)$$

A motor-for-yaw operation instruction generating unit 306 integrates, twice, the rotation angular acceleration $\omega_R'$ of the inertia rotor 74 calculated by the expression (2) to thereby calculate a number of rotations (rotation angle) and a rotation direction of the inertia rotor 74, and generate an operation instruction to the motor for yaw 72 so that the motor for yaw 72 rotates at the calculated number of rotations (rotation angle) and in the calculated rotation direction.

T1 calculated by the expression (1) may be multiplied by a conversion coefficient to thereby calculate the number of rotations (rotation angle) and the rotation direction of the inertia rotor 74 and generate the operation instruction to the motor for yaw 72 so that the motor for yaw 72 rotates at the calculated number of rotations (rotation angle) and in the calculated rotation direction.

A motor-for-yaw instruction voltage calculating unit 307 multiplies the generated operation instruction to the motor for yaw 72 by a conversion coefficient to calculate an instruction voltage. A DA converter unit for yaw 308 outputs the instruction voltage to the driver to control the rotation of the motor for yaw 72.

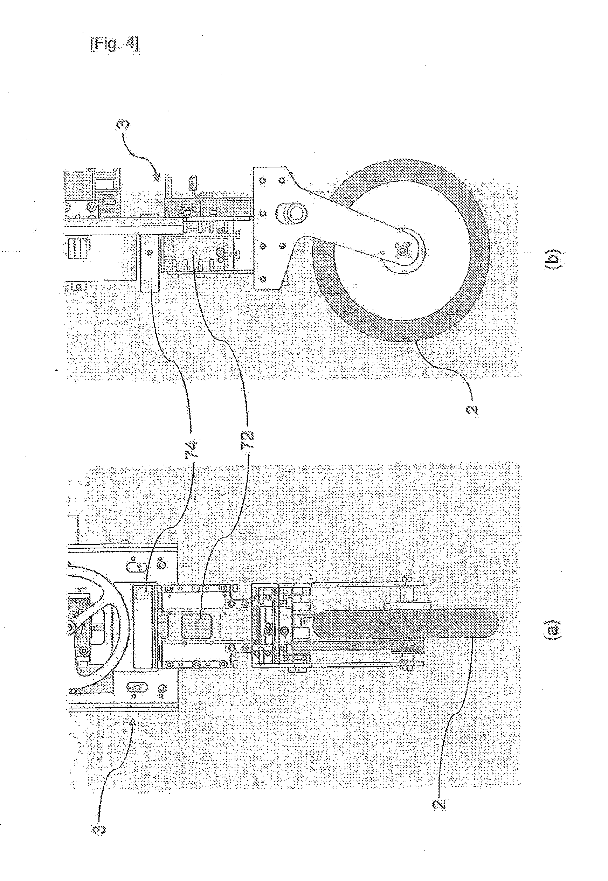

Here, a method for calculating the number of rotations and the rotation direction of the motor for yaw 72, based on the target yaw angle $\theta_t$ the specification of which has been received will be described. FIGS. 4(a), 4(b) are a front view and a side view schematically showing a constitution of a lower portion of the monocycle robot 1 to which the movement direction control apparatus according to the embodiment of the present invention is applied. FIG. 4(a) is a front view, and FIG. 4(b) is a left side view, respectively.

In FIGS. 4(a), 4(b), arrangement is made such that a central point of the wheel 2 is located on an extension line of a rotation axis of the inertia rotor 74 for yaw direction, and a rotation axis of the motor for yaw 72. Accordingly, the reaction torque by the rotation of the inertia rotor 74 directly acts on veering of the body 3, although it is reduced by the friction torque.

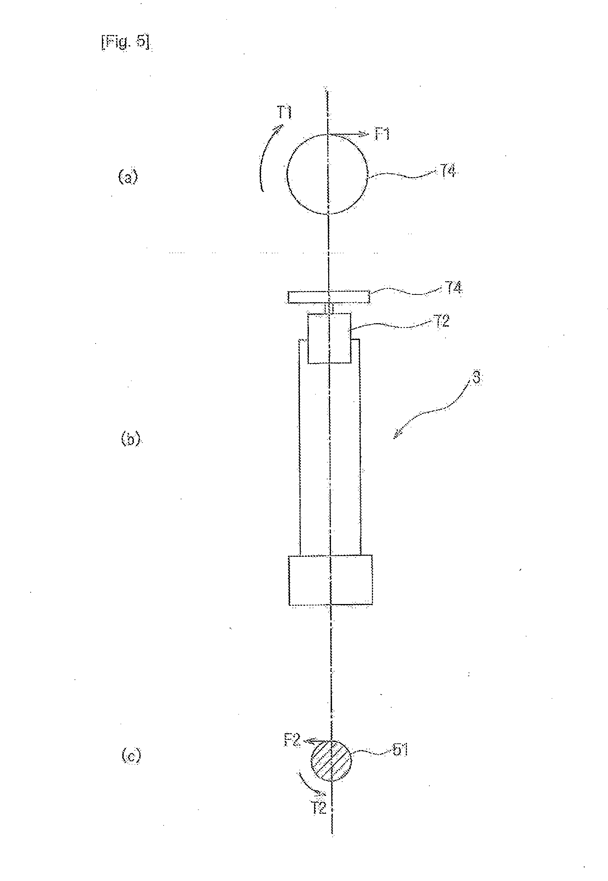

FIGS. 5(a) to 5(c) are schematic views for explaining the rotation torque occurring in the inertia rotor 74 and the body 3. FIG. 5(a) is a plan view of the inertia rotor 74, in which the circular flat plate-like inertia rotor 74 is arranged with a central axis of the body 3 serving as the rotation axis. A force in a tangent direction of the inertia rotor 74 is F1 (N), the rotation torque is T1, and a radius of the inertia rotor 74 is R1 (m).

FIG. 5(b) is a schematic view showing a side of the body 3 with the inertia rotor 74 attached. FIG. 5(c) is a schematic view showing a ground surface where the wheel 2 joined to the body 3 and the road surface come into contact with each other. In FIG. 5(c), given that a ground surface 51 where the wheel 2 and the road surface come into contact with each other is circular, a force in a tangent direction of the ground surface 51 is F2 (N), the rotation torque is T2, and a radius of the ground surface 51 is R2 (m).

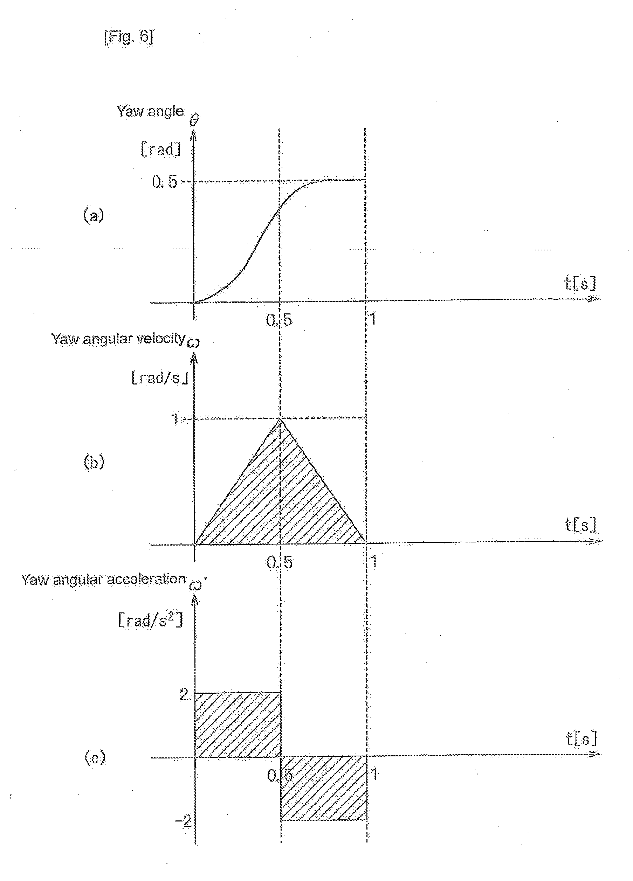

When the specification of the target yaw angle $\theta_t$ is received, the yaw angular velocity $\omega$ is calculated in accordance with the reaching time t until the target yaw angle $\theta_t$ is reached from the current traveling direction, that is, the current traveling direction of the wheel 2. FIGS. 6(a) to 6(c) are graphs showing a procedure example for calculating the yaw angular acceleration $\omega'$ from the yaw angle $\theta$. FIG. 6(a) is a graph showing temporal variation in the yaw angle $\theta$ from the current traveling direction of the wheel 2, in which the target yaw angle $\theta_t$ the specification of which has been received is reached in the reaching time t the specification of which has been received, similarly. The example of FIG. 6(a) shows a case where the specification to the effect that the target yaw angle $\theta_t$ is 30 degrees (about 0.5 rad) and the reaching time t is 1 second has been received, and the temporal variation in the yaw angle $\theta$ is appropriated so as to obtain the temporal variation in which two quadratic functions are combined after 0.5 seconds have passed.

FIG. 6(b) is a graph showing temporal variation in the yaw angular velocity $\omega$ after the rotation torque is applied to the wheel 2, and FIG. 6(c) is a graph showing temporal variation in the yaw angular acceleration $\omega'$ after the rotation torque is applied to the wheel 2. As shown in FIG. 6(b), in the present embodiment, in order that the target yaw angle $\theta_t = 0.5$ (rad) is reached in the reaching time t = 1 second, the yaw angular velocity $\omega$ increases to 1 (rad/s) at the constant yaw angular acceleration co' until 0.5 seconds have passed, and after 0.5 seconds have passed, the yaw angular velocity $\omega$ decreases to 0 (rad/s) at the constant yaw angular acceleration $\omega'$.

As shown in FIG. 6(c), the yaw angular acceleration $\omega'$ is the value obtained by carrying out the time differentiation to the yaw angular velocity $\omega$, that is, in the present embodiment, until 0.5 seconds have passed, the yaw angular acceleration $\omega'$ is 2 (rad/s$^2$) as a constant value, and after 0.5 seconds have passed, the yaw angular acceleration $\omega'$ is -2 (rad/s$^2$) as a constant value.

At a point when the yaw angular acceleration $\omega'$ is found, the rotation torque T2 in the yaw direction required to rotate the body 3 up to the target yaw angle $\theta_t$ can be calculated with an inertia moment J2 of the body 3. That is, the rotation torque T2 in the yaw direction is calculated by an expression (3).

$$T2 = J2 \times \omega' \cdots (3)$$

Here, if a mass m (kg) of the body 3 is 5 (kg), and the radius R2 (m) of the ground surface 51 where the wheel 2 and the road surface come into contact with each other is 0.05 (m), the inertia moment J2 (kgm$^2$) of the body 3 is found by an expression (4).

$$J2 = m \times R2^2 / 2 = 5 \times 0.05 \times 0.05 / 2 = 6.25 \times 10^{-3} \ (kgm^2) \cdots (4)$$

By substituting the above value into the expression (3), $6.25 \times 10^{-3} \times 2 = 0.0125$ (N · m) is obtained as the rotation torque T2 in the yaw direction required for rotating the body 3 up to 30 degrees as the target yaw angle $\theta_t$.

When the ground surface 51 where the wheel 2 and the road surface come into contact with each other is very small and the friction torque Tr has a negligible magnitude, applying the same torque as the rotation torque T2 in the yaw direction of the body 3 as the reaction torque by the rotation of the inertia rotor 74 allows the movement direction of the body 3 to be controlled. The rotation angular acceleration $\omega_R$' to be applied to the inertia rotor 74 is calculated, based on the inertia moment J1 of the inertia rotor 74 and the calculated rotation torque T1.

First, the inertia moment J1 $(kgm^2)$ of the inertia rotor 74 can be calculated by an expression (5) with a mass of the inertia rotor 74 defined as M (kg). Here, the mass M (kg) of the inertia rotor 74 is 0.134 (kg), and the radius R1 (m) of the inertial rotor 74 is 0.024 (m).

$$J1 = M \times R1^2 / 2 = 0.134 \times 0.024 \times 0.024 / 2 = 3.86 \times 10^{-5} \ (kgm^2) \cdots (5)$$

Based on the found inertia moment J1 $(kgm^2)$ of the inertia rotor 74 and the reaction torque by the rotation of the inertia rotor 74, that is, the rotation torque T1 having the same magnitude as the rotation torque T2 in the yaw direction of the body 3, the rotation angular acceleration $\omega_R$' of the inertia rotor 74 can be calculated by an expression (6).

$$\omega_R' = T1 / J1 = 0.0125 \ (N \cdot m)/3.86 \times 10^{-5} \ (kgm^2) = 324 \ (rad/s^2) \cdots (6)$$

By finding the rotation angular acceleration $\omega_R$' of the inertia rotor 74, carrying out integration twice inversely to the procedure shown in FIGS. 6(a) to 6(c) allows a rotation angle $\theta_R$ of the inertia rotor 74 to be found, and the rotation angular acceleration $\omega_R$ of the inertia rotor 74 to be found from the rotation angle $\theta_R$ of the inertia rotor 74. FIGS. 7(a) to 7(c) are graphs showing a procedure example in which the rotation angle $\theta_R$ of the inertia rotor 74 is calculated from the rotation angular acceleration $\omega_R$' of the inertia rotor 74.

FIG. 7(a) is a graph showing temporal variation in the rotation angular acceleration $\omega_R$' of the inertia rotor 74 until the reaching time t has passed. In the present embodiment, the calculated rotation angular acceleration $\omega_R$' of the inertia rotor 74 is 324 $(rad/s^2)$ as a constant value until 0.5 seconds have passed, and is -324 $(rad/s^2)$ as a constant value after 0.5 seconds have passed.

FIG. 7(b) is a graph showing time variation in rotation angular velocity $\omega_R$ of the inertia rotor 74 until the reaching time t has passed. FIG. 7(c) is a graph showing time variation in the rotation angle $\theta_R$ of the inertia rotor 74 until the reaching time t has passed. As shown in FIG. 7 (b), by integrating the calculated rotation angular acceleration $\omega_R$' of the inertia rotor 74, the rotation angular velocity $\omega_R$ of the inertia rotor 74 increases to 162 (rad/s) at the constant rotation angular acceleration $\omega_R$' until 0.5 seconds have passed, and the rotation angular velocity $\omega_R$ decreases to 0 (rad/s) at the constant rotation angular acceleration $\omega_R$' after 0.5 seconds have passed.

Accordingly, the inertia rotor 74 is rotated at about 25.8 rotations per second, that is, at 1547 rotations per minute so that the rotation angular velocity $\omega_R$ is 162 (rad/s), by which the desired reaction torque can be applied to the body 3.

Furthermore, as shown in FIG. 7(c), the constant rotation angle $\theta_R$ of the inertia rotor 74 is converged on 81 (rad) in the reaching time t = 1 second by integrating the calculated rotation angular velocity $\omega_R$ of the inertia rotor 74. Accordingly, the inertia rotor 74 rotates so that the rotation angle $\theta_R$ becomes 81 (rad), that is, rotates up to about 4640 degrees for the reaching time t = 1 second. Thus, the inertia rotor 74 rotates at about 12.9 rotations for one second, which allows the body 3 to veer at the target yaw angle $\theta_t$ the specification of which has been received.

Actuary, the magnitude of the friction torque Tr based on a velocity friction coefficient $\mu$ in the ground surface 51 is not negligible, and the body 3 cannot be rotated up to the target yaw angle $\theta_t$ the specification of which has been received, unless the reaction torque is applied extra by the friction torque Tr.

If a gravitational acceleration g is 9.8 $(m/s^2)$, the friction torque Tr can be found by an expression (7).

$$Tr = \mu \cdot m \cdot g \cdot R2 \cdots (7)$$

Accordingly, the rotation torque T1 to be applied by the rotation of the inertia rotor 74 is (T2 + Tr) as expressed in the expression (1).

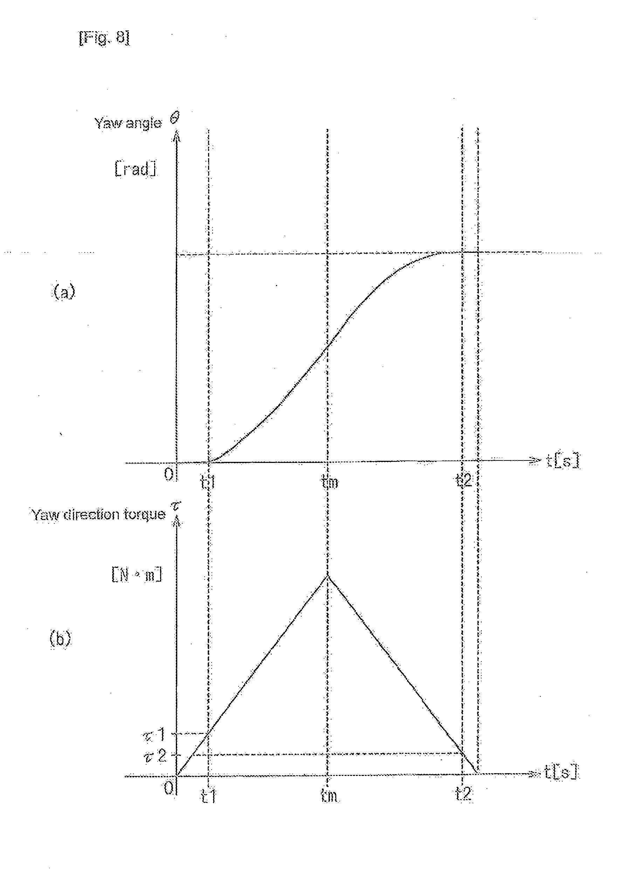

The magnitude of the friction torque Tr fluctuates, depending on the velocity friction coefficient $\mu$ on the ground surface 51 where the wheel 2 and the road surface come into contact with each other. FIGS. 8(a), 8(b) are graphs for explaining a method for specifying the friction torque Tr to be specified. FIG. 8(a) is a graph showing actual time variation in the yaw angle $\theta$ (rad) from the rotation start of the inertia rotor 74, and FIG. 8(b) is a graph showing time variation in a torque $\tau$ (N · m) in the yaw direction from the rotation start of the inertia rotor 74.

As shown in FIG. 8(b), the torque $\tau$ (N · m) in the yaw direction increases at a constant rate from the rotation start of the inertia rotor 74, while as shown in FIG. 8(a), the yaw angle $\theta$ does not fluctuate until time t1, a certain time after the rotation start of the inertia rotor 74. This is because the rotation does not start until the friction torque Tr on the ground surface 51 exceeds a friction torque based on a static friction, and at a point when the friction torque Tr exceeds the friction torque based on the static friction, that is, at the time t1, the body 3 starts the rotation in the yaw direction.

Accordingly, it can be considered that a rotation torque corresponding to the torque $\tau1$ (N · m) in the yaw direction at the time t1 is a static friction torque. Thus, when the rotation torque corresponding to the torque $\tau1$ (N · m) in the yaw direction is specified as the friction torque Tr, the high-accuracy control for the target yaw angle $\theta_t$ the specification of which has been received is enabled.

On the other hand, once the body 3 starts the rotation in the yaw direction, the velocity friction coefficient $\mu$ largely decreases. Accordingly, when the rotation torque corresponding to the torque $\tau1$ (N · m) in the yaw direction is specified as the friction torque Tr, the applied reaction torque is likely to become excessive. Accordingly, a dynamic friction torque in the state where the body 3 is rotating in the yaw direction may be specified as the friction torque Tr.

In this case, as shown in FIG. 8(a), after intermediate time tm of the reaching time t has passed since the inertia rotor 74 started the rotation, the yaw angle $\theta$ converges on the target yaw angle $\theta_t$ at time t2. This is because the friction torque on the ground surface 51 has achieved a balance with the reaction torque by the inertia rotor 74. Accordingly, as shown in FIG. 8(b), it can be considered that a rotation torque corresponding to a torque $\tau2$ (N · m) in the yaw direction at the time t2 is the dynamic friction torque. Thus, when the rotation torque corresponding to the torque $\tau2$ (N · m) in the yaw direction is specified as the friction torque Tr, the higher-accuracy control for the target yaw angle $\theta_t$ the specification of which has been received is enabled.

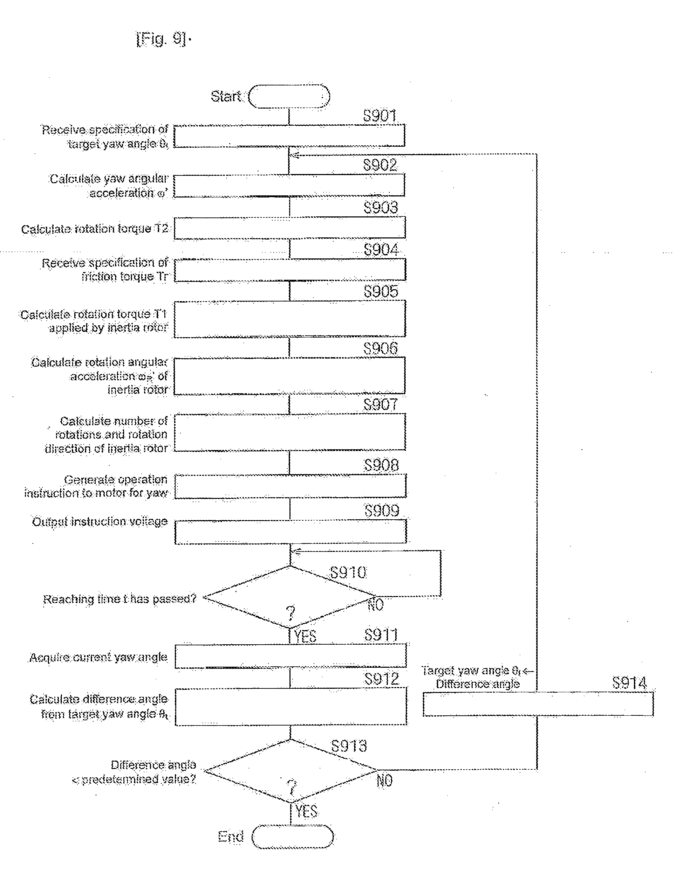

FIG. 9 is a flowchart showing a procedure of veering processing by the controller of the control board 35 of the movement direction control apparatus according to the embodiment of the present invention. The controller of the control board 35 receives the specification of the target yaw angle $\theta_t$ (step S901). The method for receiving the specification of the target yaw angle $\theta_t$ is not particularly limited, and the target yaw angle $\theta_t$ to be specified may be received externally through the radio communication such as Bluetooth (registered trademark), or the memory may be incorporated in the controller of the control board 35 to store the target yaw angle $\theta_t$ in the memory in advance. Moreover, the slot into which the memory card or the like can be inserted may be provided, and the memory card or the like in which the target yaw angle $\theta_t$ is stored may be inserted to read the target yaw angle $\theta_t$ as needed. The reaching time t until the yaw angle $\theta$, which is a rotation angle in the yaw direction, reaches the target yaw angle $\theta_t$ may be received simultaneously with the reception of the specification of the target yaw angle $\theta_t$, or may be stored in the memory of the controller as a constant time in advance.

The controller calculates the yaw angular acceleration $\omega'$ by carrying out, twice, the time differentiation to the target yaw angle $\theta_t$ the specification of which has been received (step S902). Given that the yaw angular acceleration $\omega'$ is the constant value obtained by carrying out the positive/negative inversion at the midpoint of the reaching time t, the yaw angular velocity $\omega$ monotonically increases at the constant rate until half of the reaching time t until the target yaw angle $\theta_t$ is reached has passed, and after half of the reaching time until the target yaw angle $\theta_t$ is reached has passed, the yaw angular velocity $\omega$ monotonically decreases at the constant rate.

The yaw angular acceleration $\omega'$ can be calculated by carrying out the time differential to the assumed yaw angular velocity $\omega$. In the above-described example, the yaw angular acceleration $\omega'$ can be calculated as a positive constant value until half of the reaching time t until the target yaw angle $\theta_t$ is reached has passed, and can be calculated as a negative constant value after half of the reaching time t until the target yaw angle $\theta_t$ is reached has passed, respectively.

The controller calculates the rotation torque T2 required for rotating the body 3 up to the target yaw angle $\theta_t$ based on the calculated yaw angular acceleration $\omega'$ (step S903). The controller receives the specification of the friction torque Tr in accordance with the velocity friction coefficient $\mu$ between the wheel 2 and the road surface (step S904). The controller adds the calculated rotation torque T2 and the friction torque Tr the specification of which has been received to calculate the rotation torque T1 to be applied by the rotation of the inertia rotor 74 (step S905).

The controller calculates the rotation angular acceleration $\omega_R'$ of the inertia rotor 74, based on the calculated rotation torque T1 (step S906), and by integrating the calculated rotation angular acceleration $\omega_R'$ of the inertia rotor 74 twice, the number of rotations (rotation angle) and the rotation direction of the inertia rotor 74 are calculated (step S907), the operation instruction to the motor for yaw 72 is generated so as to rotate the motor for yaw 72 at the calculated number of rotations (rotation angle) and the calculated rotation direction (step S908). In steps S906 to S908, by multiplying the rotation torque T1 calculated in step S905 by the conversion coefficient, the number of rotations (rotation angle) and the rotation direction of the inertia rotor 74 may be calculated, and the operation instruction to the motor for yaw 72 may be generated so as to rotate the motor for yaw 72 at the calculated number of rotations (rotation angle) and the calculated rotation direction. The controller multiplies the generated operation instruction to the motor for yaw 72 by the conversion coefficient to calculate the instruction voltage and output the instruction voltage to the driver (step S909).

The controller determines whether or not the reaching time t has passed (step S910), and if the controller determines that the reaching time t has not passed (step S910: NO), the controller enters a passing-waiting state. If the controller determines that the reaching time t has passed (step S910: YES), the controller acquires the current yaw angle (step S911), and calculates the difference angle from the target yaw angle $\theta_1$ (step S912).

The controller determines whether or not the calculated difference angle is smaller than a predetermined value (step S913), and if the controller determines that the difference angle is the predetermined value or larger (step S913: NO), the controller sets the calculated difference angle to the new target yaw angle $\theta_t$ (step S914), and returns the processing to step S902 to repeat the above-described processing. If the controller determines that the calculated angle is smaller than the predetermine value (step S913: YES), the controller determines that the veering has been completed, and ends the processing.

As described above, according to the present embodiment, based on the target yaw angle $\theta_t$ the specification of which has been received, the rotation angular acceleration $\omega_{R'}$ to be generated in the yaw direction of the inertia rotor 74 that generates the reaction torque can be accurately estimated, and controlling the number of rotations and the rotation direction of the motor for yaw 72 that rotates the inertia rotor 74 enables the body 3 to be veered in the desired movement direction.

Obviously, the above-described embodiment can be modified in a range not departing from the scope of the present invention. For example, the present invention is not limited to the specification of the static friction torque based on the static friction coefficient, and the dynamic friction torque based on the dynamic friction coefficient as the friction torque, but for example, the specification of the friction torque may be variable, so that the static friction torque may be specified until the time t1, and the dynamic friction torque may be specified after the time t1 has passed.

DESCRIPTION OF REFERENCE SYMBOLS

1 monocycle robot (movement direction control apparatus)
2 wheel
3 body
35 control board
36 battery
71 gyrosensor for yaw (angular velocity sensor for yaw)
72 motor for yaw
73 encoder for yaw (rotation sensor for yaw)
74 inertia rotor (rotor)
m body mass
M inertia rotor mass
J1 inertia moment of inertia rotor around rotation axis
J2 inertia moment of body around rotation axis

**Claims**

1. A movement direction control apparatus made up of a wheel that rotates and moves in a front-back direction, and a body that is joined to a rotary shaft of the wheel, and swings in a pitch direction and in a roll direction above the wheel, the body (3) comprising:

    an angular velocity sensor for yaw (71) that detects a yaw angular velocity, which is a rotation angular velocity in a yaw direction;
    a rotor (74) with a substantially vertical direction of the body serving as a rotation axis; and
    a motor for yaw (72) that rotates the rotor (74),
    wherein a rotation angle in the yaw direction of the body is controlled in accordance with a reaction torque accompanying the rotation of the rotor (74);
    a target yaw-angle specification receiving unit (301) that receives specification of a yaw angle of the wheel as a target of a movement direction;
    friction-torque information acquiring means (304) for acquiring information of a friction torque including a magnitude and a direction of the friction torque;
    a yaw-direction angular acceleration calculating unit (302) that calculates a rotation angular acceleration in the yaw direction, based on the target yaw angle the specification of which has been received;
    reaction torque calculating means (303) for calculating the reaction torque, based on the calculated rotation angular acceleration in the yaw direction; and
a motor-for-yaw operation instruction generating unit (306) that generates an operation instruction to the motor for yaw, based on the calculated reaction torque and the acquired information of the friction torque.

2. The movement direction control apparatus according to claim 1, wherein the friction-torque information acquiring means (304) comprises friction torque receiving means for receiving specification of the magnitude and the direction of the friction torque.

3. The movement direction control apparatus according to claim 1,
wherein the friction-torque information acquiring means (304) comprises:

   yaw rotation angle detecting means for detecting a rotation angle of the wheel in the yaw direction;
   fluctuating torque detecting means for detecting a torque in the yaw direction at time when the rotation angle in the yaw direction starts fluctuation; and
   static-friction torque calculating means for calculating a magnitude of a static friction torque, based on the detected torque in the yaw direction, and
   the calculated static friction torque is acquired as the friction torque.

4. The movement direction control apparatus according to claim 1 or claim 3,
wherein the friction-torque information acquiring means (304) comprises:

   convergent torque detecting means for detecting the torque in the yaw direction at a time when the rotation angle in the yaw direction converges; and
   dynamic-friction torque calculating means for calculating a magnitude of a dynamic friction torque, based on the detected torque in the yaw direction, and
   the calculated dynamic friction torque is acquired as the friction torque.

5. A computer program executable in a computer mounted on a movement direction control apparatus, the movement direction control apparatus being made up of a wheel that rotates and moves in a front-back direction, and a body that is joined to a rotary shaft of the wheel, and swings in a pitch direction and in a roll direction above the wheel, the body (3) comprising:

   an angular velocity sensor for yaw (71) that detects a yaw angular velocity, which is a rotation angular velocity in a yaw direction;
   a rotor (74) with a substantially vertical direction of the body (3) serving as a rotation axis; and
   a motor for yaw (72) that rotates the rotor,

wherein the computer is caused to function as means for controlling a rotation angle in the yaw direction of the body in accordance with a reaction torque accompanying the rotation of the rotor, the computer program causing the computer to additionally function as:

   a yaw-angle specification receiving unit (301) that receives specification of a yaw angle of the wheel as a target of a movement direction;
   friction-torque information acquiring means (304) for acquiring information of a friction torque including a magnitude and a direction of the friction torque;
   a yaw-direction angular acceleration calculating unit (302) that calculates a rotation angular acceleration in the yaw direction, based on the yaw angle the specification of which has been received;
   reaction torque calculating means (303) for calculating the reaction torque, based on the calculated rotation angular acceleration in the yaw direction; and
   a motor-for-yaw operation instruction generating unit (306) that generates an operation instruction to the motor for yaw, based on the calculated reaction torque and the acquired information of the friction torque.

6. The computer program according to claim 5 that causes the friction-torque information acquiring means (304) to function as friction torque receiving means for receiving specification of the magnitude and the direction of the friction torque.

7. The computer program according to claim 5 that causes the friction-torque information acquiring means (304) to function as:

yaw rotation angle detecting means for detecting a rotation angle of the wheel in the yaw direction;
fluctuating torque detecting means for detecting a torque in the yaw direction at time when the rotation angle in the yaw direction starts fluctuation; and
static-friction torque calculating means for calculating a magnitude of a static friction torque, based on the detected torque in the yaw direction; and
means for acquiring the calculated static friction torque as the friction torque.

8. The computer program according to claim 5 or claim 7 that causes the friction-torque information acquiring means (304) to function as:

convergent torque detecting means for detecting the torque in the yaw direction at time when the rotation angle in the yaw direction converges; and
dynamic-friction torque calculating means for calculating a magnitude of a dynamic friction torque, based on the detected torque in the yaw direction; and
means for acquiring the calculated dynamic friction torque as the friction torque.

**Patentansprüche**

1. Bewegungsrichtungssteuervorrichtung, die aus einem Rad, das sich dreht und in einer Vorwärts-Rückwärts-Richtung bewegt, und einem Körper, der an eine drehbar gelagerte Welle des Rads angefügt ist, besteht und in einer Nickrichtung und in einer Rollrichtung über dem Rad schwingt,
wobei der Körper (3) Folgendes aufweist:

einen Winkelgeschwindigkeitssensor für Gieren (71), der eine Gierwinkelgeschwindigkeit erkennt, welche eine Drehwinkelgeschwindigkeit in einer Gierrichtung ist;
einen Rotor (74), bei dem eine im Wesentlichen vertikale Richtung des Körpers als Drehachse dient; und
einen Motor für Gieren (72), der den Rotor (74) dreht,
wobei ein Drehwinkel in der Gierrichtung des Körpers in Übereinstimmung mit einem Reaktionsdrehmoment, das die Drehung des Rotors (74) begleitet, gesteuert wird;
eine Zielgierwinkelvorgabe-Empfangseinheit (301), die eine Vorgabe eines Gierwinkels des Rads als Ziel einer Bewegungsrichtung empfängt;
ein Reibungsdrehmoment-Informationserfassungsmittel (304) zur Erfassung von Informationen über ein Reibungsdrehmoment einschließlich einer Größe und einer Richtung des Reibungsdrehmoments;
eine Gierrichtungswinkelbeschleunigungs-Berechnungseinheit (302), die eine Drehwinkelbeschleunigung in der Gierrichtung auf der Basis des Sollgierwinkels, dessen Vorgabe empfangen wurde, berechnet;
ein Reaktionsdrehmomentberechnungsmittel (303) zum Berechnen des Reaktionsdrehmoments auf der Basis der berechneten Drehungswinkelbeschleunigung in der Gierrichtung und
eine Motor-zum-Gieren-Betriebsanweisungserzeugungseinheit (306), die eine Betriebsanweisung an den Motor für Gieren auf der Basis des berechneten Reaktionsdrehmoments und der erfassten Informationen des Reibungsdrehmoments erzeugt.

2. Bewegungsrichtungssteuervorrichtung nach Anspruch 1, wobei das Reibungsdrehmoment-Informationserfassungsmittel (304) ein Reibungsdrehmomentempfangsmittel zum Empfangen einer Vorgabe der Größe und der Richtung des Reibungsdrehmoments aufweist.

3. Bewegungsrichtungssteuervorrichtung nach Anspruch 1, wobei das Reibungsdrehmoment-Informationserfassungsmittel (304) Folgendes aufweist:

ein Gierdrehwinkelerkennungsmittel zum Erkennen eines Drehwinkels des Rads in der Gierrichtung;
ein Drehmomentschwankungserkennungsmittel zum Erkennen eines Drehmoments in der Gierrichtung zu dem Zeitpunkt, an dem der Drehwinkel in der Gierrichtung zu schwanken beginnt; und
ein Statisches-Reibungsdrehmoment-Berechnungsmittel zum Berechnen einer Größe eines statischen Reibungsdrehmoments auf der Basis des erkannten Drehmoments in der Gierrichtung, und
das berechnete statische Reibungsdrehmoment als das Reibungsdrehmoment erfasst wird.

4. Bewegungsrichtungssteuervorrichtung nach Anspruch 1 oder Anspruch 3, wobei das Reibungsdrehmoment-Informationserfassungsmittel (304) Folgendes aufweist:

ein Konvergentes-Drehmoment-Erkennungsmittel zum Erkennen des Drehmoments in der Gierrichtung zu einem Zeitpunkt, an dem der Drehwinkel in der Gierrichtung konvergiert; und
ein Dynamisches-Reibungsdrehmoment-Berechnungsmittel zum Berechnen einer Größe eines dynamischen Reibungsdrehmoments auf der Basis des erkannten Drehmoments in der Gierrichtung, und
das berechnete dynamische Reibungsdrehmoment als das Reibungsdrehmoment erfasst wird.

5. Computerprogramm, das in einem auf einer Bewegungsrichtungssteuervorrichtung montierten Computer ausführbar ist, wobei die Bewegungsrichtungssteuervorrichtung aus einem Rad, das sich dreht und in einer Vorwärts-Rückwärts-Richtung bewegt, und einem Körper, der an eine drehbar gelagerte Welle des Rads angefügt ist, besteht und in einer Nickrichtung und in einer Rollrichtung über dem Rad schwingt,
wobei der Körper (3) Folgendes aufweist:

einen Winkelgeschwindigkeitssensor für Gieren (71), der eine Gierwinkelgeschwindigkeit erkennt, welche eine Drehwinkelgeschwindigkeit in einer Gierrichtung ist;
einen Rotor (74), bei dem eine im Wesentlichen vertikale Richtung des Körpers (3) als Drehachse dient; und
einen Motor für Gieren (72), der den Rotor (74) dreht,

wobei der Computer veranlasst wird, als Mittel zum Steuern eines Drehwinkels in der Gierrichtung des Körpers in Übereinstimmung mit einem Reaktionsdrehmoment, das die Drehung des Rotors (74) begleitet, zu funktionieren, wobei das Computerprogramm den Computer veranlasst, außerdem wie folgt zu funktionieren:

eine Gierwinkelvorgabe-Empfangseinheit (301), die eine Vorgabe eines Gierwinkels des Rads als Ziel einer Bewegungsrichtung empfängt;
ein Reibungsdrehmoment-Informationserfassungsmittel (304) zur Erfassung von Informationen über ein Reibungsdrehmoment einschließlich einer Größe und einer Richtung des Reibungsdrehmoments;
eine Gierrichtungswinkelbeschleunigungs-Berechnungseinheit (302), die eine Drehwinkelbeschleunigung in der Gierrichtung auf der Basis des Gierwinkels, dessen Vorgabe empfangen wurde, berechnet;
ein Reaktionsdrehmomentberechnungsmittel (303) zum Berechnen des Reaktionsdrehmoments auf der Basis der berechneten Drehungswinkelbeschleunigung in der Gierrichtung und
eine Motor-zum-Gieren-Betriebsanweisungserzeugungseinheit (306), die eine Betriebsanweisung an den Motor für Gieren auf der Basis des berechneten Reaktionsdrehmoments und der erfassten Informationen des Reibungsdrehmoments erzeugt.

6. Computerprogramm nach Anspruch 5, das das Reibungsdrehmoment-Informationserfassungsmittel (304) veranlasst, als Reibungsdrehmomentempfangsmittel zum Empfangen einer Vorgabe der Größe und der Richtung des Reibungsdrehmoments zu funktionieren.

7. Computerprogramm nach Anspruch 5, das das Reibungsdrehmoment-Informationserfassungsmittel (304) veranlasst, als Folgendes zu funktionieren:

Gierdrehwinkelerkennungsmittel zum Erkennen eines Drehwinkels des Rads in der Gierrichtung;
Drehmomentschwankungserkennungsmittel zum Erkennen eines Drehmoments in der Gierrichtung zu dem Zeitpunkt, an dem der Drehwinkel in der Gierrichtung zu schwanken beginnt; und
Statisches-Reibungsdrehmoment-Berechnungsmittel zum Berechnen einer Größe eines statischen Reibungsdrehmoments auf der Basis des erkannten Drehmoments in der Gierrichtung und
Mittel zur Erfassung des berechneten statischen Reibungsdrehmoments als das Reibungsdrehmoment.

8. Computerprogramm nach Anspruch 5 oder Anspruch 7, das das Reibungsdrehmoment-Informationserfassungsmittel (304) veranlasst, als Folgendes zu funktionieren:

Konvergentes-Drehmoment-Erkennungsmittel zum Erkennen des Drehmoments in der Gierrichtung zu dem Zeitpunkt, an dem der Drehwinkel in der Gierrichtung konvergiert; und
Dynamisches-Reibungsdrehmoment-Berechnungsmittel zum Berechnen einer Größe eines dynamischen Reibungsdrehmoments auf der Basis des erkannten Drehmoments in der Gierrichtung und
Mittel zur Erfassung des berechneten dynamischen Reibungsdrehmoments als das Reibungsdrehmoment.

**EP 2 410 396 B1**

**Revendications**

1.  Appareil de commande de direction de déplacement composé d'une roue qui tourne et se déplace d'avant en arrière, et d'un corps qui est joint à un arbre rotatif de la roue, et bascule dans une direction de tangage et dans une direction de roulis au-dessus de la roue,
    le corps (3) comprenant :

    un capteur de vitesse angulaire de lacet (71) qui détecte une vitesse angulaire de lacet, laquelle est une vitesse angulaire de rotation dans une direction de lacet ;
    un rotor (74), un sens sensiblement vertical du corps servant d'axe de rotation ; et
    un moteur de lacet (72) qui fait tourner le rotor (74),
    dans lequel un angle de rotation dans la direction du lacet du corps est commandé en fonction d'un couple de réaction accompagnant la rotation du rotor (74) ;
    une unité de réception de spécification d'angle de lacet cible (301) qui reçoit une spécification d'un angle de lacet de la roue comme cible de direction de déplacement ;
    un moyen d'acquisition d'informations de couple de frottement (304) pour acquérir des informations d'un couple de frottement comportant une grandeur et une direction du couple de frottement ;
    une unité de calcul d'accélération angulaire dans la direction du lacet (302) qui calcule une accélération angulaire de rotation dans la direction du lacet, en fonction de l'angle de lacet cible dont la spécification a été reçue ;
    un moyen de calcul de couple de réaction (303) pour calculer le couple de réaction, en fonction de l'accélération angulaire de rotation calculée dans la direction du lacet ; et
    une unité de génération d'instructions de fonctionnement de moteur de lacet (306) qui génère une instruction de fonctionnement du moteur de lacet, en fonction du couple de réaction calculé et des informations acquises du couple de frottement.

2.  Appareil de commande de direction de déplacement selon la revendication 1, dans lequel le moyen d'acquisition d'informations de couple de frottement (304) comprend un moyen de réception de couple de frottement pour recevoir une spécification de la grandeur et de la direction du couple de frottement.

3.  Appareil de commande de direction de déplacement selon la revendication 1,
    dans lequel le moyen d'acquisition d'informations de couple de frottement (304) comprend :

    un moyen de détection d'angle de rotation de lacet pour détecter un angle de rotation de la roue dans la direction du lacet ;
    un moyen de détection de couple de fluctuation pour détecter un couple dans la direction du lacet quand l'angle de rotation dans la direction du lacet commence à fluctuer ; et
    un moyen de calcul de couple de frottement statique pour calculer une grandeur d'un couple de frottement statique, en fonction du couple détecté dans la direction du lacet, et
    le couple de frottement statique calculé est acquis comme couple de frottement.

4.  Appareil de commande de direction de déplacement selon la revendication 1 ou la revendication 3,
    dans lequel le moyen d'acquisition d'informations de couple de frottement (304) comprend :

    un moyen de détection de couple de convergence pour détecter le couple dans la direction du lacet quand l'angle de rotation dans la direction du lacet converge ; et
    un moyen de calcul de couple de frottement dynamique pour calculer une grandeur d'un couple de frottement dynamique, en fonction du couple détecté dans la direction du lacet, et
    le couple de frottement dynamique calculé est acquis comme couple de frottement.

5.  Programme informatique exécutable dans un ordinateur monté sur un appareil de commande de direction de déplacement, l'appareil de commande de direction de déplacement étant composé d'une roue qui tourne et se déplace d'avant en arrière, et d'un corps qui est joint à un arbre rotatif de la roue, et bascule dans une direction de tangage et dans une direction de roulis au-dessus de la roue,
    le corps (3) comprenant :

    un capteur de vitesse angulaire de lacet (71) qui détecte une vitesse angulaire de lacet, laquelle est une vitesse angulaire de rotation dans une direction de lacet ;
    un rotor (74), un sens sensiblement vertical du corps (3) servant d'axe de rotation ; et

14

un moteur de lacet (72) qui fait tourner le rotor (74),

dans lequel l'ordinateur est amené à fonctionner comme moyen de commande d'un angle de rotation dans la direction du lacet du corps en fonction d'un couple de réaction accompagnant la rotation du rotor, le programme informatique amenant l'ordinateur à fonctionner de plus comme :

unité de réception de spécification d'angle de lacet (301) qui reçoit une spécification d'un angle de lacet de la roue comme cible de direction de déplacement ;
moyen d'acquisition d'informations de couple de frottement (304) pour acquérir des informations d'un couple de frottement comportant une grandeur et une direction du couple de frottement ;
unité de calcul d'accélération angulaire dans la direction du lacet (302) qui calcule une accélération angulaire de rotation dans la direction du lacet, en fonction de l'angle de lacet dont la spécification a été reçue ;
moyen de calcul de couple de réaction (303) pour calculer le couple de réaction, en fonction de l'accélération angulaire de rotation calculée dans la direction du lacet ; et
unité de génération d'instructions de fonctionnement de moteur de lacet (306) qui génère une instruction de fonctionnement du moteur de lacet, en fonction du couple de réaction calculé et des informations acquises du couple de frottement.

6. Programme informatique selon la revendication 5, lequel amène le moyen d'acquisition d'informations de couple de frottement (304) à fonctionner comme moyen de réception de couple de frottement pour recevoir une spécification de la grandeur et du sens du couple de frottement.

7. Programme informatique selon la revendication 5, lequel amène le moyen d'acquisition d'informations de couple de frottement (304) à fonctionner comme :

moyen de détection d'angle de rotation de lacet pour détecter un angle de rotation de la roue dans la direction du lacet ;
moyen de détection de couple de fluctuation pour détecter un couple dans la direction du lacet quand l'angle de rotation dans la direction du lacet commence à fluctuer ; et
moyen de calcul de couple de frottement statique pour calculer une grandeur d'un couple de frottement statique, en fonction du couple détecté dans la direction du lacet, et
moyen d'acquisition du couple de frottement statique calculé comme couple de frottement.

8. Programme informatique selon la revendication 5 ou la revendication 7, lequel amène le moyen d'acquisition d'informations de couple de frottement (304) à fonctionner comme :

moyen de détection de couple de convergence pour détecter le couple dans la direction du lacet quand l'angle de rotation dans la direction du lacet converge ; et
moyen de calcul de couple de frottement dynamique pour calculer une grandeur d'un couple de frottement dynamique, en fonction du couple détecté dans la direction du lacet ; et
moyen d'acquisition du couple de frottement dynamique calculé comme couple de frottement.

[Fig. 1]

[Fig. 2]

[Fig. 3]

[Fig. 4]

[Fig. 5]

(a)

(b)

(c)

[Fig. 6]

Yaw angle θ

[rad]

0.5

(a)

t[s]

0.5    1

Yaw angular velocity ω

[rad/s]

1

(b)

t[s]

0.5    1

Yaw angular acceleration ω'

[rad/s²]

2

(c)

t[s]

0.5    1

-2

[Fig.7]

Rotation angular acceleration $\dot{\omega}_R$

[rad/s²]

324

(a)

0.5    1    t[s]

-324

Rotation angular velocity $\omega_R$

[rad/s]

162

(b)

0.5    1    t[s]

Rotation angle $\theta_R$

[rad]

81

(c)

0.5    1    t[s]

[Fig. 8]

(a)

(b)

EP 2 410 396 B1

[Fig. 9]·

Start

**S901** Receive specification of target yaw angle $\theta_t$

**S902** Calculate yaw angular acceleration $\omega'$

**S903** Calculate rotation torque T2

**S904** Receive specification of friction torque Tr

**S905** Calculate rotation torque T1 applied by inertia rotor

**S906** Calculate rotation angular acceleration $\omega_2'$ of inertia rotor

**S907** Calculate number of rotations and rotation direction of inertia rotor

**S908** Generate operation instruction to motor for yaw

**S909** Output instruction voltage

**S910** Reaching time t has passed? — NO

YES

**S911** Acquire current yaw angle

**S912** Calculate difference angle from target yaw angle $\theta_t$

**S913** Difference angle < predetermined value? — NO

**S914** Target yaw angle $\theta_t$ ← Difference angle

YES

End

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007063665 A

**Non-patent literature cited in the description**

- **TAKASHI KASAI.** Attitude Control of Monocycle. *Master's Thesis in Graduate School of Systems and Information Engineering,* January 2005, 1-37
- **TAKASHI KASAI.** Attitude Control of Monocycle. *Master's Thesis in Graduate School of Systems and Information Engineering*
- **MAJIMA ; KASAI.** A Controller for Changing the Yaw Direction of an Underactuated Unicycle Robot. *Graduate School of Systems and Information Engineering*